(19) Europäisches Patentamt
European Patent Office
Office européen des brevets

(11) **EP 3 975 390 B1**

(12) **EUROPEAN PATENT SPECIFICATION**

(45) Date of publication and mention
of the grant of the patent:
**23.10.2024 Bulletin 2024/43**

(21) Application number: **21194014.3**

(22) Date of filing: **31.08.2021**

(51) International Patent Classification (IPC):
*H02K 5/128* (2006.01)     *F16K 31/04* (2006.01)
*H02K 15/14* (2006.01)     *F16K 27/00* (2006.01)
*H02K 5/08* (2006.01)     *H02K 21/14* (2006.01)

(52) Cooperative Patent Classification (CPC):
**H02K 5/128; F16K 27/00; F16K 31/04;**
**H02K 15/14;** H02K 5/08; H02K 21/145;
H02K 2213/03

(54) **MOTOR-OPERATED VALVE COMPRISING IMPROVED MEANS FOR SUPPORTING AN AIR GAP CAN WITHIN THE MOTOR STATOR UNIT**

MOTORBETRIEBENES VENTIL MIT VERBESSERTEN MITTELN ZUM HALTEN EINES SPALTROHRES INNERHALB DER MOTORSTATOREINHEIT

VANNE MOTORISÉE COMPRENANT DES MOYENS AMELIORÉS POUR SUPPORTER UN MANCHON D'ENTREFER A L'INTERIEUR DE L'UNITE DE STATOR DE MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2020 JP 2020159554**

(43) Date of publication of application:
**30.03.2022 Bulletin 2022/13**

(73) Proprietor: **Fujikoki Corporation Tokyo 158-0082 (JP)**

(72) Inventors:
• YATAGAI, Hiroomi
Tokyo, 1580082 (JP)
• ASANO, Teppei
Tokyo, 1580082 (JP)

(74) Representative: **Ter Meer Steinmeister & Partner Patentanwälte mbB**
**Artur-Ladebeck-Strasse 51**
**33617 Bielefeld (DE)**

(56) References cited:
CN-A- 102 135 204     JP-A- 2011 208 729
JP-A- 2019 146 299

## Description

### BACKGROUND OF THE INVENTION

#### 1. Field of the Invention

The present invention relates to a motor-operated valve.

#### 2. Description of the Related Art

An example of motor-operated valves according to the related art is disclosed in Japanese Unexamined Patent Application Publication No. 2001-343085.

The motor-operated valve disclosed in Japanese Unexamined Patent Application Publication No. 2001-343085 includes a motor-operated-valve main body and a stator unit (coil for a motor-operated valve). The motor-operated-valve main body includes an outer shell made of metal. The stator unit includes a cover and a stator. The cover is made of synthetic resin. The cover is in the shape of a cap. The stator has a hollow cylindrical shape. The stator is accommodated in the cover. The space between the cover and the stator is filled with filling resin. The stator unit has a cavity into which the motor-operated-valve main body is inserted. The cover includes a dome portion. The motor-operated-valve main body includes a hemispherical ceiling portion, which is located inside the dome portion.

This motor-operated valve may, for example, be installed in an apparatus such as an outdoor unit of an air conditioner. In some cases, the motor-operated valve is subjected to vibrations transmitted from the apparatus in operation. The stator unit included in the motor-operated valve is held in place on the motor-operated-valve main body by elastic holding tabs. The ceiling portion, which is part of a can in the stator unit, is thus subjected to vibrations and repeatedly comes into collision with the dome portion. Consequently, the dome portion can be damaged. The motor-operated valve is assembled in such a manner that the motor-operated-valve main body is inserted into the cavity of the stator unit. When the motor-operated-valve main body is inserted deep into the cavity, the top part of the ceiling portion can hit against the dome portion. In such a case, the force exerted to insert the motor-operated-valve main body will be concentrated in a particular spot. Consequently, the dome portion can be damaged.

JP 2019 146299 A discloses a stator unit, and more particularly, a casting type stator unit in which a resin having low hardness such as urethane resin is used as a mold resin, and an electric valve including the same.

JP 2011 208729 A discloses a motor-operated valve provided with a can which incorporates a rotor rotatably, wherein the stator is externally fitted by the can since the rotor is driven. The motor-operated valve has a characteristic in the fixation structure of the stator with respect to a can.

CN 102 035 204 B discloses a motor-operated valve comprising a rotatable motor built with the housing and for driving the outer stator being embedded in described housing, being especially related to a kind of stator for the motor-operated valve in a fixation arrangement of the housing.

### SUMMARY OF THE INVENTION

It is an object of the present invention to provide a motor-operated valve configured to eliminate or reduce the possibility that a cover of a stator unit is damaged.

To that end, an aspect of the present invention is directed to a motor-operated valve. The motor-operated valve includes a valve main body, a can attached to the valve main body, and a stator unit mounted on the outside of the can. The can includes a hollow cylindrical portion and a ceiling portion contiguous with an end of the hollow cylindrical portion. The stator unit includes a cover in a shape of a cap, a stator accommodated in the cover and having a hollow cylindrical shape, and a mold made of filling resin with which the space between the stator and the cover is filled. The stator unit has a cavity into which the can is inserted in an axial direction. The cover includes a dome portion. The ceiling portion is located inside the dome portion. When the can is placed in an installation position such that the ceiling portion and the dome portion face each other in the axial direction with a space therebetween, the can is held by the stator unit. When the can is placed in a contact position such that the ceiling portion and the dome portion are in contact with each other in the axial direction, the can is able to shift to the installation position.

That is, when the can is placed in the contact position such that the ceiling portion and the dome portion are in contact with each other in the axial direction, the can is able to shift to the installation position and is not held by the stator unit. When the can is placed in the installation position such that the ceiling portion and the dome portion face each other in the axial direction with a space therebetween, the can is held by the stator unit. Since the can is held in the installation position by the stator unit, repeated collisions between the dome portion and the ceiling portion of the can that are subjected to vibrations transmitted to the motor-operated valve are avoidable. This configuration eliminates or reduces the possibility that the cover of the stator unit is damaged.

When the can is inserted into the cavity so as to reach the installation position, the dome portion and the ceiling portion face each other in the axial direction with a space therebetween. When the can is inserted into the cavity so as to go beyond the installation position, the can is placed in the contact position. That is, the installation position is closer than the contact position to the side from which the can is inserted. When insertion of the can into the cavity is stopped at the installation position, the ceiling portion is kept from contact with the dome portion.

The dome portion according to one aspect of the present invention has an inner surface that includes a corner part. When the can is placed in the installation position, the corner part and the ceiling portion preferably face each other in the axial direction with a space therebetween. When the can is placed in the contact position, the corner part and the ceiling portion have line contact. When the can is inserted so as to go beyond the installation position and is placed in the contact position, the ceiling portion of the can and the corner part of the cover have line contact such that the force exerted to insert the can is not concentrated in a particular spot. This configuration eliminates or reduces the possibility that the cover of the stator unit is damaged.

The corner part and the can preferably have coincident axes. The corner part is preferably circular or arc-shaped and preferably has a diameter smaller than the outside diameter of the can. If the ceiling portion hits against the corner part, the resultant force would thus be exerted more uniformly on the dome portion. This configuration more effectively eliminates or reduces the possibility that the cover is damaged.

The hollow cylindrical portion of the can has protrusions that are each hemispherical. The stator unit includes holding tabs that are arranged so as to face an external circumferential surface of the hollow cylindrical portion. The holding tabs each include a holding portion that is a through-hole or a recess in which corresponding one of the protrusions is held when the can is placed in the installation position. The dimension of each of the holding portions in the axial direction is equal to or smaller than the diameter of each of the protrusions. L1 - L2 < D1/2 holds, where L1 denotes the distance in the axial direction between a center of each of the holding portions in the axial direction and the corner part, L2 denotes the distance in the axial direction between a center of each of the protrusions and a point that is located on the ceiling portion and comes into contact with the corner part, and D1 denotes the dimension of each of the holding portions in the axial direction. In a state in which the ceiling portion and the corner part are in contact with each other, the center of each of the protrusions is located within the corresponding one of the holding portions and is closer than the center of the corresponding one of the holding portions in the axial direction to the dome portion. In this state, the holding tabs undergo elastic deformation. The restoring force of the holding tabs causes the can to shift to the position (installation position) where the center of each of the protrusions coincides with the center of the corresponding one of the holding portions in the axial direction. Consequently, the can is appropriately positioned with respect to the stator unit.

The dome portion preferably has a top part that is thinner than a part extending from an external surface of the dome portion to the corner part. A reduction in the thickness of the dome portion is achieved accordingly. The cover designed as above may be molded from resin in such a way as to minimize occurrence of sink marks.

According to another aspect of the present invention, the dome portion has an inner surface that includes a rib. When the can is placed in the installation position, the rib and the ceiling portion face each other in the axial direction with a space therebetween. When the can is placed in the contact position, a tip surface of the rib and the ceiling portion have surface contact. When the can is inserted so as to go beyond the installation position and is placed in the contact position, the ceiling portion of the can and the rib of the cover have surface contact such that the force exerted to insert the can is not concentrated in a particular spot. This configuration eliminates or reduces the possibility that the cover of the stator unit is damaged.

The rib and the can preferably have coincident axes. The rib is preferably circular or arc-shaped and preferably has a diameter smaller than the outside diameter of the can. If the ceiling portion hits against the rib, the resultant force would thus be exerted more uniformly on the dome portion. This configuration more effectively eliminates or reduces the possibility that the cover is damaged.

The hollow cylindrical portion of the can has protrusions that are each hemispherical. The stator unit includes holding tabs that are arranged so as to face an external circumferential surface of the hollow cylindrical portion. The holding tabs each include a holding portion that is a through-hole or a recess in which corresponding one of the protrusions is held when the can is placed in the installation position. The dimension of each of the holding portions in the axial direction is equal to or smaller than the diameter of each of the protrusions. L3 - L4 < D1/2 holds, where L3 denotes the distance in the axial direction between a center of each of the holding portions in the axial direction and the rib, L4 denotes the distance in the axial direction between a center of each of the protrusions and a point that is located on the ceiling portion and comes into contact with the rib, and D1 denotes the dimension of each of the holding portions in the axial direction. In a state in which the ceiling portion and the rib are in contact with each other, the center of each of the protrusions is located within the corresponding one of the holding portions and is closer than the center of the corresponding one of the holding portions in the axial direction to the dome portion. In this state, the holding tabs undergo elastic deformation. The restoring force of the holding tabs causes the can to shift to the position (installation position) where the center of each of the protrusions coincides with the center of the corresponding one of the holding portions in the axial direction. Consequently, the can is appropriately positioned with respect to the stator unit.

The dome portion preferably has a top part that is thinner than a part extending from an external surface of the dome portion to the tip surface of the rib. A reduction in the thickness of the dome portion is achieved accordingly. The cover designed as above may be molded from resin in such a way as to minimize occurrence of sink marks.

The dome portion preferably has a top part having an opening. The motor-operated valve may thus be smaller in size in the axial direction.

The motor-operated valve according to these aspects of the present invention is configured to eliminate or reduce the possibility that the cover of the stator unit is damaged.

BRIEF DESCRIPTION OF THE DRAWINGS

Fig. 1 illustrates a motor-operated valve according to an embodiment of the present invention;
Fig. 2 is a bottom view of a cover of a stator unit included in the motor-operated valve illustrated in Fig. 1;
Fig. 3 is a perspective view including a sectional view of part of the cover illustrated in Fig. 2;
Fig. 4 is a sectional view of a stator of the stator unit included in the motor-operated valve illustrated in Fig. 1;
Fig. 5 is an enlarged view of the motor-operated valve illustrated in Fig. 1;
Fig. 6 is another enlarged view of the motor-operated valve illustrated in Fig. 1;
Fig. 7 illustrates the configuration of a modification of the motor-operated valve illustrated in Fig. 1;
Fig. 8 is a bottom view of a cover of a stator unit included in the motor-operated valve illustrated in Fig. 7;
Fig. 9 is a perspective view including a sectional view of part of the cover illustrated in Fig. 8;
Fig. 10 is an enlarged sectional view of the motor-operated valve illustrated in Fig. 7;
Fig. 11 illustrates the configuration of another modification of the motor-operated valve illustrated in Fig. 1; and
Fig. 12 illustrates a motor-operated valve according to the related art.

DESCRIPTION OF THE PREFERRED EMBODIMENTS

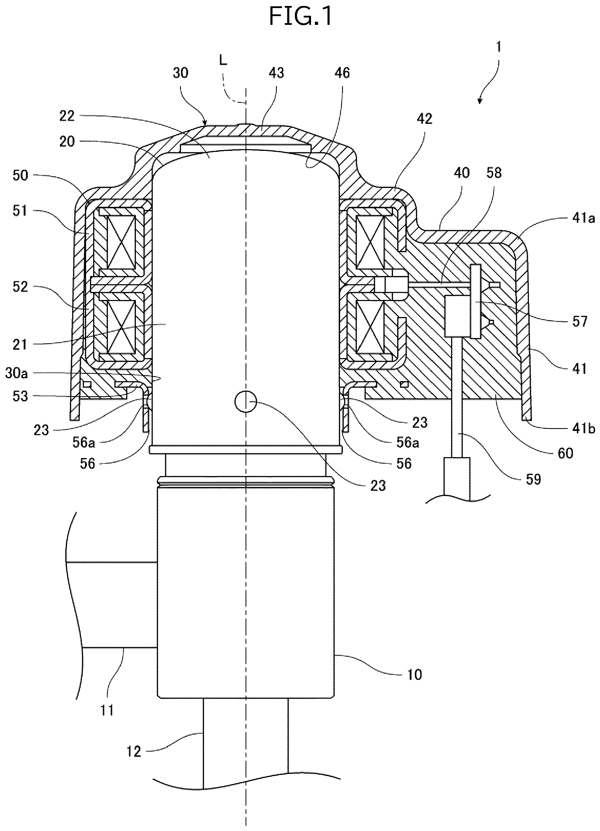

Hereinafter, a motor-operated valve according to an embodiment of the present invention will be described with reference to Figs. 1 to 6.

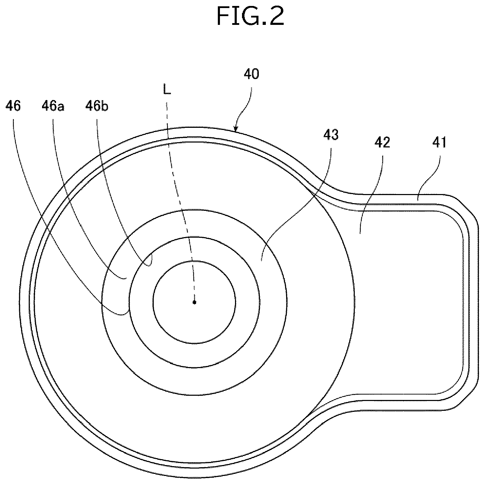

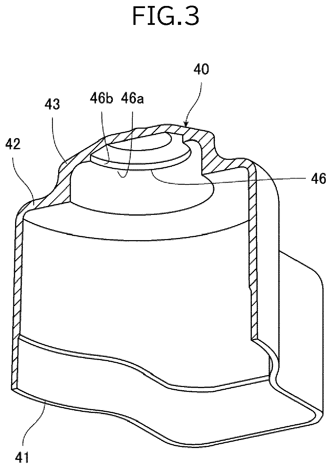

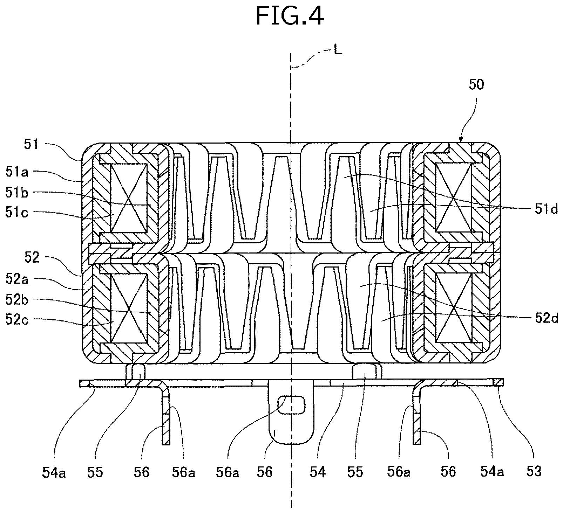

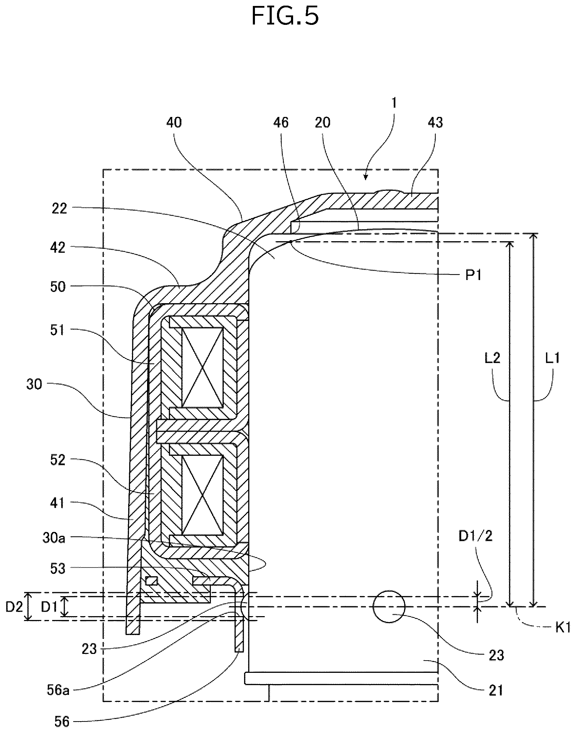

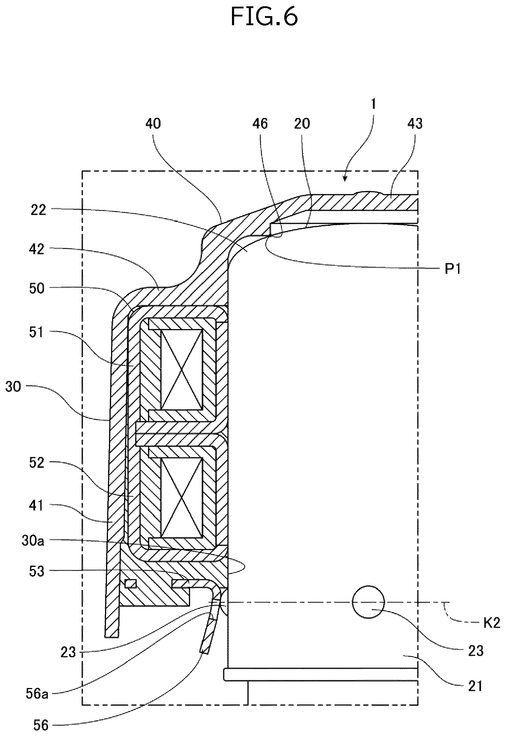

Fig. 1 is a front view of a motor-operated valve according to an embodiment of the present invention. Fig. 2 is a bottom view of a cover of a stator unit included in the motor-operated valve illustrated in Fig. 1. Fig. 3 is a perspective view including a sectional view of part of the cover illustrated in Fig. 2. Fig. 4 is a sectional view of a stator of the stator unit included in the motor-operated valve illustrated in Fig. 1. Figs. 5 and 6 are enlarged front views of the motor-operated valve illustrated in Fig. 1. Fig. 5 illustrates a state in which a can is inserted into a cavity of the stator unit so as to reach an installation position. Fig. 6 illustrates a state in which the can is inserted into the cavity of the stator unit so as to go beyond the installation position. The stator unit illustrated in Figs. 1, 5, and 6 is viewed in section.

Referring to Fig. 1, a motor-operated valve 1 includes a valve main body 10, a can 20, and a stator unit 30. Expressions "upper" and "lower" herein refer to the positional relationship in the top-bottom direction in the accompanying drawings.

The valve main body 10 has a hollow cylindrical shape with a bottom. The valve main body 10 includes a valve chamber (not illustrated) and a valve port (not illustrated) communicating with the valve chamber. A first conduit 11 and a second conduit 12 are fixed to the valve main body 10 by brazing. The first conduit 11 is connected to the valve chamber. The second conduit 12 is connected to the valve port. A valve element (not illustrated) for opening and closing the valve port is disposed in the valve chamber.

The can 20 has a hollow cylindrical shape with its upper end closed. The can 20 includes a hollow cylindrical portion 21 and a ceiling portion 22, which are constructed as one piece. The valve main body 10 is attached to a lower end of the hollow cylindrical portion 21. The hollow cylindrical portion 21 has an external circumferential surface, on which protrusions 23 are arranged. The protrusions 23 are each hemispherical. The term "hemispherical" herein refers not only to the shape of a hemisphere obtained by dividing a sphere into equal halves but also to a substantially hemispherical shape such as the shape of a dome obtained by cutting a sphere along a plane that does not pass through the center of the sphere. Four protrusions 23 are arranged at 90° intervals on the external circumferential surface of the hollow cylindrical portion 21. The ceiling portion 22 is hemispherical. The ceiling portion 22 is contiguous with an upper end (an end) of the hollow cylindrical portion 21. The upper end of the hollow cylindrical portion 21 is closed by the ceiling portion 22. A rotor (not illustrated) is disposed within the can 20.

The rotor and the stator unit 30 constitute a stepping motor. The valve main body 10 is made of stainless steel or brass. The can 20 is made of stainless steel.

The stator unit 30 is disposed on the outside of the can 20. The stator unit 30 includes a cover 40, a stator 50, and a mold 60.

The cover 40 is made of synthetic resin. The cover 40 is formed by injection molding. The cover 40 is in the shape of a cap. The cover 40 includes a circumferential wall portion 41 and an upper-end wall portion 42, which are constructed as one piece. The circumferential wall portion 41 is larger than the contour of the stator 50. The stator 50 is disposed on the inner side with respect to the circumferential wall portion 41, with a space left between the stator 50 and the circumferential wall portion 41. The upper-end wall portion 42 is contiguous with an upper end 41a (an end) of the circumferential wall portion 41. The upper-end wall portion 42 has a dome portion 43. The dome portion 43 is at an area in the upper-end wall portion 42 facing the can 20 in the top-bottom direction. The upper-end wall portion 42 and the can 20 face each other along a circumference, from which the dome portion 43 protrudes upward. The inside diameter of the dome portion 43 is equal to the outside diameter of the can 20.

As illustrated in Figs. 2 and 3, the dome portion 43 has an inner surface including a corner part 46, which extends in the form of a line. The corner part 46 includes an annular flat surface 46a and a circumferential surface 46b. The annular flat surface 46a faces downward. The circumferential surface 46b is connected to an inner circumferential edge of the annular flat surface 46a and faces inward. The annular flat surface 46a and the circumferential surface 46b form a right angle. The corner part 46 is circular. The corner part 46 and the can 20 have coincident axes. The diameter of the corner part 46 is smaller than the outside diameter of the can 20. Alternatively, the corner part 46 may be elliptic or may be arc-shaped or, more specifically, be made up of segments of a circle. The top part of the dome portion 43 is thinner than the part extending from the external surface of the dome portion 43 to the corner part 46.

The cover 40 is made of rigid resin, such as polybutylene terephthalate (PBT) (coefficient of linear expansion: $2.5 \times 10^{-5}/°C$) or polyphenylene ether (PPE) (coefficient of linear expansion: $6.6 \times 10^{-5}/°C$).

The stator 50 has a hollow cylindrical shape. The stator 50 includes a first stator 51, a second stator 52, a fastening member 53, and a lead wire connection section 57. The first stator 51, the second stator 52, and the fastening member 53 are aligned in the top-bottom direction (i.e., along an axis L).

The first stator 51 includes a yoke 51a, a bobbin 51b, and a coil 51c. The yoke 51a is a metal component. The coil 51c in the yoke 51a is made of a coil wire wound around the bobbin 51b. The yoke 51a includes pole teeth 51d, which are claw poles. The pole teeth 51d include downward-pointing pole teeth and upward-pointing pole teeth. Tips (tapered tip portions) of the downward-pointing pole teeth face downward, and tips (tapered tip portions) of the upward-pointing pole teeth face upward. The downward-pointing teeth and the upward-pointing teeth are alternately arranged in the circumferential direction.

The second stator 52 is structurally similar to the first stator 51. More specifically, the second stator 52 includes metal components such as a yoke 52a, a bobbin 52b, a coil 52c, and pole teeth 52d. The inside diameter of the first stator 51 and the inside diameter of the second stator 52 are each equal to the outside diameter of the can 20.

The fastening member 53 includes a flat plate portion 54, connecting tabs 55, and holding tabs 56. The flat plate portion 54 has an annular shape. The fastening member 53 is formed by using the following procedure: stamping out the flat plate portion 54, the connecting tabs 55, and the holding tabs 56 from a metal sheet; folding the connecting tabs 55 in one direction in such a manner that each connecting tab 55 and the flat plate portion 54 form a right angle; and folding the holding tabs 56 in the opposite direction in such a manner that each holding tab 56 and the flat plate portion 54 form a right angle. The flat plate portion 54 has through-holes 54a. The connecting tabs 55 are welded to the yoke 52a of the second stator 52. The first stator 51, the second stator 52, and the fastening member 53 have coincident axes.

The fastening member 53 in this embodiment includes four holding tabs 56. The holding tabs 56 are disposed so as to correspond to the respective protrusions 23 of the can 20. The holding tabs 56 are disposed so as to face the hollow cylindrical portion 21 of the can 20 in the lateral direction (i.e., in a direction orthogonal to the axis L). The holding tabs 56 are elastically deformable. The holding tabs 56 each include a holding portion 56a, which is a through-hole. D1 is equal to or less than D2, where D1 denotes the dimension of each holding portion 56a in the top-bottom direction, and D2 denotes the diameter of each protrusion 23 of the can 20. When the can 20 is placed in the installation position (see Figs. 1 and 5), the center of each holding portion 56a in the top-bottom direction coincides with the center of the corresponding protrusion 23 and the protrusions 23 are held in the respective holding portions 56a accordingly. In this way, the can 20 and the stator unit 30 are held in place. The installation position is the position where the can 20 is fixed to the stator unit 30. When the can 20 is placed in the installation position, the can 20 and the stator unit 30 fit each other appropriately. It is not required that the holding portions 56a be through-holes. Each holding portion 56a may be a recess shaped in conformance with the corresponding protrusion 23.

The lead wire connection section 57 is a substrate connected to a tip of a coil terminal pin 58, which extends from the stator 50 in a direction orthogonal to the axis L. The lead wire connection section 57 is connected with a lead wire 59.

In this embodiment, the inside diameter of the stator 50 or, more specifically, the inside diameter of each of the first stator 51 and the second stator 52 is equal to the inside diameter of the dome portion 43 of the cover 40.

The stator 50 is accommodated in the cover 40. The first stator 51 included in the stator 50 is in contact with the upper-end wall portion 42.

The inside of the stator 50 is filled with the mold 60. More specifically, the inside of the first stator 51, the inside of the second stator 52, the space between the second stator 52 and the flat plate portion 54, and the through-holes 54a of the flat plate portion 54 are filled with the mold 60. The flat plate portion 54 is embedded in the mold 60. The space between the cover 40 and the stator 50 is also filled with the mold 60.

The mold 60 is made of highly flexible resin, such as urethane, epoxy, or silicone. The highly flexible resin is hereinafter referred to as filling resin. The filling resin used in this embodiment is thermoset urethane.

The stator unit 30 has a cavity 30a. The cavity 30a includes the internal space of the stator 50. The can 20 is inserted into the cavity 30a along the axis L. The hollow cylindrical portion 21 of the can 20 is located inside the stator 50, and the ceiling portion 22 of the can 20 is located inside the dome portion 43. When the can 20 is placed in the installation position, the ceiling portion 22, which is located inside the dome portion 43, and the corner part 46 face each other along the axis L with a space therebetween.

The valve main body 10, the can 20, and the stator unit 30 (i.e., the cavity 30a, the dome portion 43, the corner part 46, and the stator 50) included in the motor-operated valve 1 each have a central axis that coincides with the axis L.

The following describes a procedure of how to assemble the motor-operated valve 1.

The first conduit 11 and the second conduit 12 are fixed to the valve main body 10 by brazing. Components such as the valve element and the rotor (not illustrated) are disposed in the can 20, and a lower end of the can 20 is welded to an upper end of the valve main body 10.

In a state in which a lower end 41b of the cover 40 faces upward, the stator 50 is placed in the cover 40. A jig (not illustrated) that has a hollow cylindrical shape and has an outside diameter equal to the outside diameter of the can 20 is then inserted into the stator 50 and into the dome portion 43 of the cover 40. The cover 40 and the stator 50 are positioned accordingly. As the filling resin, urethane in liquid form is then poured into the cover 40 so as to flow into the stator 50 and the space between the cover 40 and the stator 50. The mold 60 is obtained by setting of urethane. Subsequently, the jig is pulled out of the stator 50 and the dome portion 43 of the cover 40. The space left after the removal of the jig is the cavity 30a of the stator unit 30.

The holding portions 56a of the holding tabs 56 and the corresponding protrusions 23 of the can 20 are aligned along the axis L. In this state, the can 20 is inserted into the cavity 30a of the stator unit 30 along the axis L. As illustrated in Fig. 5, when the can 20 is inserted into the cavity 30a and reaches a predetermined installation position, the protrusions 23 of the can 20 are held in the respective holding portions 56a of the holding tabs 56. More specifically, the center of each holding portion 56a in the top-bottom direction coincides with the center of the corresponding protrusion 23. K1 in Fig. 5 denotes a line passing through the center of each of the holding portion 56a in the top-bottom direction and passing through the center of the corresponding protrusion 23. In this state, the corner part 46 of the cover 40 and the ceiling portion 22 of the can 20 face each other in the top-bottom direction with a space therebetween. The can 20 is held in the installation position by the stator unit 30 accordingly.

When a strong force is exerted to insert the can 20 into the cavity 30a, the can 20 goes beyond the installation position and reaches contact position. In such a case, the corner part 46 and the ceiling portion 22 have line contact so as to be aligned in the top-bottom direction, as illustrated in Fig. 6. When the can 20 is placed in the contact position, the can 20 is not held by the stator unit 30 and is able to shift downward (toward the installation position). In this embodiment, the following expression (1) holds for the motor-operated valve 1:

$$L1 - L2 < D1/2 \ldots (1)$$

where L1 denotes the distance in the top-bottom direction between the center of each holding portion 56a in the top-bottom direction and the corner part 46. L2 denotes the distance in the top-bottom direction between the center of each protrusion 23 of the can 20 and a point P1, which is located on the ceiling portion 22 and comes into contact with the corner part 46. D1 denotes the dimension of each holding portion 56a in the top-bottom direction.

In a state in which the ceiling portion 22 and the corner part 46 are in contact with each other, the center of each protrusion 23 is located within the corresponding holding portion 56a and is closer than the center of the corresponding holding portion 56a in the top-bottom direction to the dome portion 43. K2 in Fig. 6 denotes a line passing through the center of each of the protrusion 23. In this state, the holding tabs 56 undergo elastic deformation. When the handler moves his/her hand off the can 20, the restoring force of the holding tabs 56 causes the can 20 to shift automatically to the position (installation position) where the center of each protrusion 23 coincides with the center of the corresponding holding portion 56a in the top-bottom direction. Consequently, the can 20 is appropriately positioned with respect to the stator unit 30.

As described above, the can 20 is attached to the stator unit 30 by inserting the can 20 into the cavity 30a of the stator unit 30 along the axis L in the state in which each holding portion 56a and the corresponding protrusion 23 are aligned along the axis L. Alternatively, a different procedure may be adopted to attach the can 20 to the stator unit 30. With each holding tab 56 and the corresponding protrusion 23 not being aligned along the axis L, the can 20 is inserted into the cavity 30a of the stator unit 30 along the axis L in such a manner that the ceiling portion 22 of the can 20 comes into contact with the corner part 46 of the cover 40; that is, the can 20 is placed in the contact position. In the state in which the ceiling portion 22 is in contact with the corner part 46, the can 20 is rotated around the axis L against the cover 40 (the stator unit 30). The protrusions 23 shift in the direction of rotation, with the axis L as the axis of rotation. Consequently, the center of each protrusion 23 is located within the corresponding holding portion 56a. When the handler moves his/her hand off the can 20, the restoring force of the holding tabs 56 causes the can 20 to shift automatically to the position (installation position) where the center of each protrusion 23 coincides with the center of the corresponding holding portion 56a in the top-bottom direction. As in the case with the aforementioned procedure, the can 20 is appropriately positioned with respect to the stator unit 30.

The motor-operated valve 1 in this embodiment has been described so far. The motor-operated valve 1 includes the valve main body 10, the can 20, and the stator unit 30. The can 20 is attached to the valve main body 10. The stator unit 30 is mounted on the outside of the can 20. The can 20 includes the hollow cylindrical portion 21 and the ceiling portion 22, which is contiguous with the upper end of the hollow cylindrical portion 21. The stator unit 30 includes the cover 40, the stator (the first stator 51 and the second stator 52), and the mold 60. The cover 40 is in the shape of a cap. The stator is accommodated in the cover and has a hollow cylindrical shape. The mold 60 is made of filling resin with which the space between the stator and the cover 40 is filled. The stator unit 30 has the cavity 30a, into which the can 20 is inserted in the top-bottom direction (along the axis L). The cover 40 includes the dome portion 43. The ceiling portion 22 is located inside the dome portion 43. When the can 20 is placed in the installation position in such a manner that the ceiling portion 22 and the dome portion 43 face each other in the top-bottom direction with a space therebetween, the can 20 is held by the stator unit 30. When the can 20 is placed in the contact position in such a manner that the ceiling portion 22 and the dome portion 43 are in contact with each other in the top-bottom direction, the can 20 is able to shift to the installation position. That is, when the can 20 is placed in the contact position, the can 20 is not held by the stator unit 30. When the can 20 is placed in the installation position, the can 20 is held by the stator unit 30 and repeated collisions between the dome portion 43 and the ceiling portion 22 of the can 20 that are subjected to vibrations transmitted to the motor-operated valve 1 are thus avoidable. This configuration eliminates or reduces the possibility that the cover 40 of the stator unit 30 is damaged.

When the can 20 is inserted into the cavity 30a and reaches the installation position, the dome portion 43 and the ceiling portion 22 face each other in the top-bottom direction with a space therebetween. When the can 20 is inserted into the cavity 30a so as to go beyond the installation position, the can 20 is placed in the contact position. That is, the installation position is closer than the contact position to the side from which the can 20 is inserted. When insertion of the can 20 into the cavity 30a is stopped at the installation position, the ceiling portion 22 is kept from contact with the dome portion 43.

The inner surface of the dome portion 43 includes the corner part 46. When the can 20 is placed in the installation position in the cavity 30a of the stator unit 30, the corner part 46 and the ceiling portion 22 face each other in the top-bottom direction with a space therebetween. When the can 20 is inserted so as to go beyond the installation position and is placed in the contact position, the corner part 46 and the ceiling portion 22 have line contact. That is, when the can 20 is placed in the installation position, the can 20 is held by the stator unit 30, with the ceiling portion 22 and the corner part 46 being spaced from each other. Accordingly, repeated collisions between the dome portion 43 and the ceiling portion 22 of the can 20 that are subjected to vibrations transmitted to the motor-operated valve 1 are thus avoidable. When the can 20 is inserted into the cavity 30a so as to go beyond the installation position and is placed in the contact position, the ceiling portion 22 of the can 20 and the corner part 46 of the cover 40 have line contact such that the force exerted to insert the can 20 is not concentrated in a particular spot. This configuration eliminates or reduces the possibility that the cover 40 of the stator unit 30 is damaged.

The corner part 46 and the can 20 have coincident axes. The corner part 46 is circular, and the diameter of the corner part 46 is smaller than the outside diameter of the can 20. Accordingly, if the ceiling portion 22 hits against the corner part 46, the resultant force would thus be exerted more uniformly on the dome portion 43. This configuration more effectively eliminates or reduces the possibility that the cover 40 is damaged.

The hollow cylindrical portion 21 of the can 20 has the protrusions 23, which are each hemispherical. The stator unit 30 includes the holding tabs 56, which are arranged so as to face the external circumferential surface of the hollow cylindrical portion 21. The holding tabs 56 include their respective holding portions 56a. In a state in which the can 20 is placed in the installation position, the protrusions 23 are held in the respective holding portions 56a. The dimension of each holding portion 56a in the top-bottom direction is equal to or smaller than the diameter of each protrusion 23. $L1 - L2 < D1/2$ holds for the motor-operated valve 1. $L1$ denotes the distance in the top-bottom direction between the center of each holding portion 56a in the top-bottom direction and the corner part 46. $L2$ denotes the distance in the top-bottom direction between the center of each protrusion 23 and the point P1, which is located on the ceiling portion 22 and comes into contact with the corner part 46. $D1$ denotes the dimension of each holding portion 56a in the top-bottom direction. In a state in which the ceiling portion 22 and the corner part 46 are in contact with each other, the center of each protrusion 23 is located within the corresponding holding portion 56a and is closer than the center of the corresponding holding portion 56a in the top-bottom direction to the dome portion 43. In this state, the holding tabs 56 undergo elastic deformation. The restoring force of the holding tabs 56 causes the can 20 to shift to the position (installation position) where the center of each protrusion 23 coincides with the center of the corresponding holding portion 56a in the top-bottom direction. Consequently, the can 20 is appropriately positioned with respect to the stator unit 30. In this embodiment, the distance between the ceiling portion 22 of the can 20 placed in the installation position and the corner part 46 is long enough to prevent a collision between the ceiling portion 22 and the corner part 46 under the influence of vibrations of the motor-operated valve 1 and is preferably in the range of 0.5 to 3 mm.

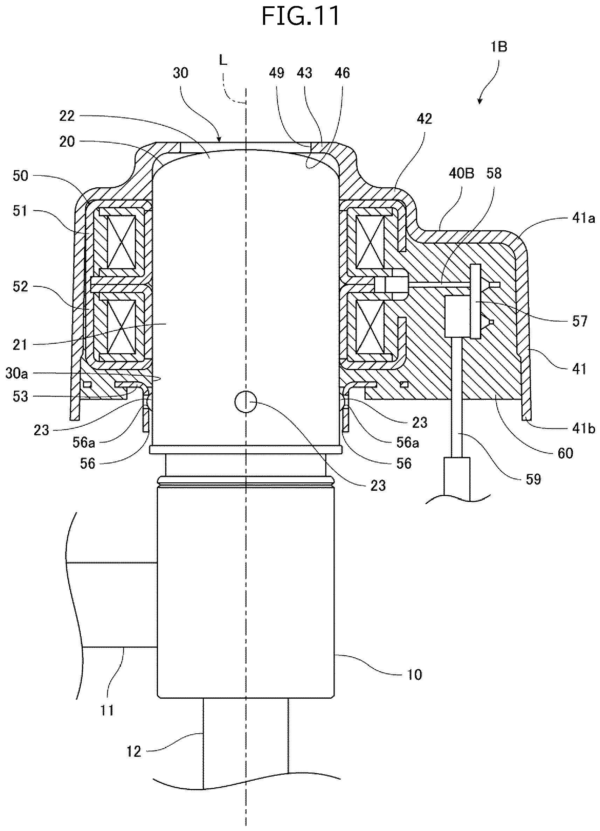

The top part of the dome portion 43 of the motor-operated valve 1 is closed. Alternatively, the top part of the dome portion 43 may have an opening. Fig. 11 illustrates a motor-operated valve 1B, which includes a cover 40B. The top part of the dome portion 43 of the cover 40B has an opening 49. The opening 49 is located on the inner side with respect to the corner part 46. The motor-operated valve 1B is thus smaller in size in the top-bottom direction.

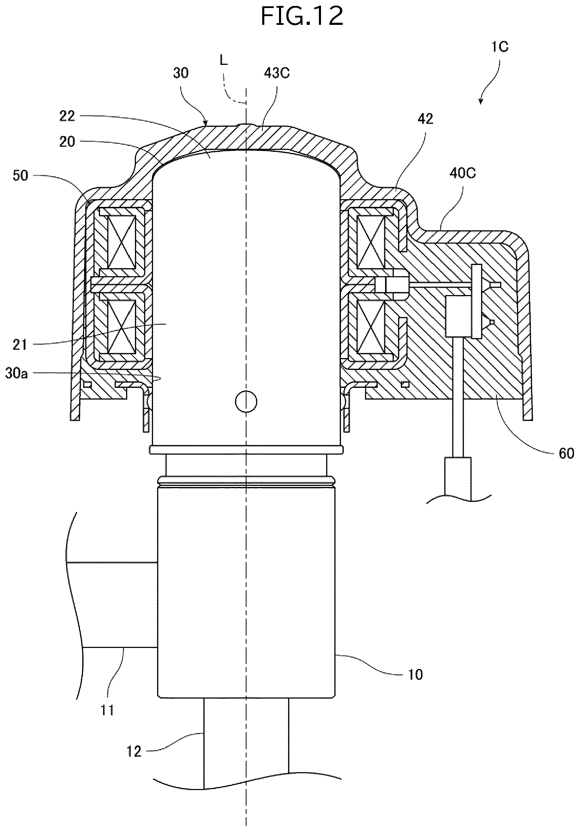

The top part of the dome portion 43 is thinner than the part extending from the external surface of the dome portion 43 to the corner part 46. The cover 40 designed as above may be molded from resin in such a way as to minimize occurrence of sink marks. Referring to Fig. 12, a motor-operated valve 1C is a motor-operated valve according to the related art and includes a cover 40C. The cover 40C includes a dome portion 43C, which is made thicker to ensure adequate stiffness. The motor-operated valve 1C is otherwise structurally identical to the motor-operated valve 1 described above except that the cover 40C is structured as above. When the cover 40C is molded from resin, the increased thickness of the dome portion 43C leads to occurrence of sink marks (depressions), which would cause defective molding.

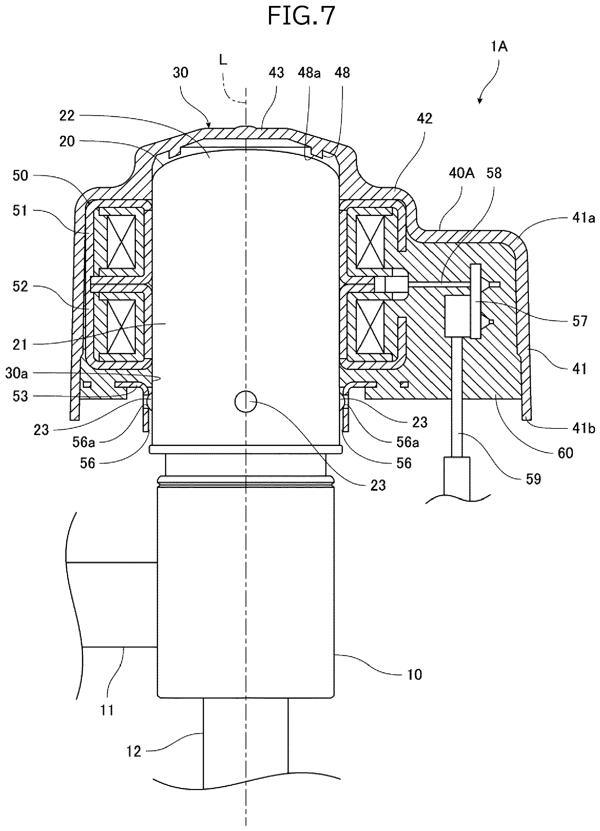

Although an embodiment has been described above in which the cover 40 included in the motor-operated valve 1 includes the corner part 46, the present invention is not limited to this example. Figs. 7 to 10 illustrate a motor-operated valve 1A, which is a modification of the motor-operated valve 1 described above.

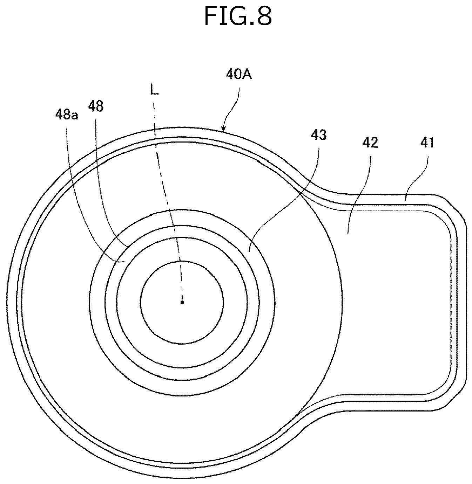

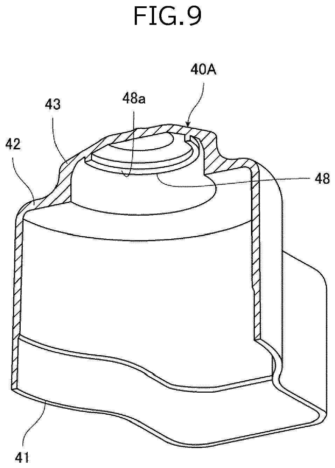

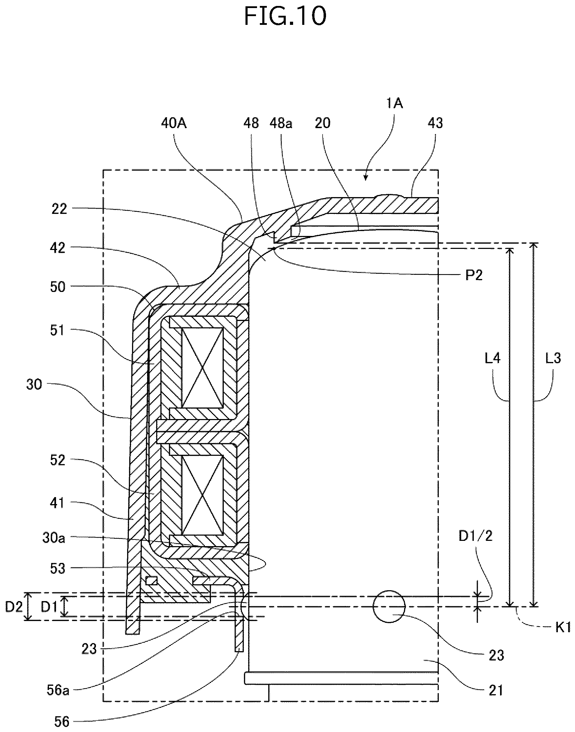

Fig. 7 is a front view of the modification of the motor-operated valve according to the present invention, illustrating the configuration thereof. Fig. 8 is a bottom view of a cover of a stator unit included in the motor-operated valve illustrated in Fig. 7. Fig. 9 is a perspective view including a sectional view of part of the cover illustrated in Fig. 8. Fig. 10 is an enlarged front view of the motor-operated valve illustrated in Fig. 7. The stator unit illustrated in Figs. 7 and 10 is viewed in section. Fig. 10 illustrates a state in which a can is inserted into a cavity of the stator unit so as to reach an installation position.

The motor-operated valve 1A includes a cover 40A, which includes a rib 48. The motor-operated valve 1A is otherwise structurally identical to the motor-operated valve 1 described above except that the cover 40A is structured as follows.

The cover 40A is made of synthetic resin. The cover 40A is formed by injection molding. The cover 40A is in the shape of a cap. The cover 40A includes the circumferential wall portion 41 and the upper-end wall portion 42, which are constructed as one piece. The upper-end wall portion 42 has a dome portion 43. The dome portion 43 is at an area in the upper-end wall portion 42 facing the can 20 in the top-bottom direction. The upper-end wall portion 42 and the can 20 face each other along the circumference, from which the dome portion 43 protrudes upward.

As illustrated in Figs. 8 and 9, the dome portion 43 has an inner surface including the rib 48, which extends in the form of a line. The rib 48 extends downward (toward the lower end 41b of the circumferential wall portion 41) from the inner surface of the dome portion 43. The rib 48 is circular, and the diameter of the rib 48 is smaller than the outside diameter of the can 20. The rib 48 and the can 20 have coincident axes. Alternatively, the rib 48 may be elliptic or may be arc-shaped or, more specifically, made up of segments of a circle. The top part of the dome portion 43 is thinner than the part extending from the external surface of the dome portion 43 to a tip surface 48a of the rib 48.

The motor-operated valve 1A is configured as follows. When the can 20 is inserted into the cavity 30a of the stator unit 30 and reaches a predetermined installation position, the can 20 is held by the stator unit 30, and the rib 48 and the ceiling portion 22 face each other in the top-bottom direction with a space therebetween. When the can 20 is inserted into the cavity 30a so as to go beyond the installation position, the can 20 is placed in a contact position in such a manner that the tip surface 48a of the rib 48 and the ceiling portion 22 have surface contact. When the can 20 is placed in the contact position, the can 20 is able to shift to the installation position and is not held by the stator unit 30. When the can 20 is placed in the installation position, the can 20 is held by the stator unit 30, with the ceiling portion 22 and the rib 48 being spaced from each other. Accordingly, repeated collisions between the dome portion 43 and the ceiling portion 22 of the can 20 that are subjected to vibrations transmitted to the motor-operated valve 1A are thus avoidable. When the can 20 is inserted so as to go beyond the installation position and is placed in the contact position, the ceiling portion 22 of the can 20 and the rib 48 of the cover 40A have surface contact such that the force exerted to insert the can 20 is not concentrated in a particular spot. This configuration eliminates or reduces the possibility that the cover 40A of the stator unit 30 is damaged.

The rib 48 is circular, and the diameter of the rib 48 is smaller than the outside diameter of the can 20. The rib 48 and the can 20 have coincident axes. Accordingly, if the ceiling portion 22 hits against the rib 48, the resultant force would thus be exerted more uniformly on the dome portion 43. This configuration more effectively eliminates or reduces the possibility that the cover 40A is damaged.

The hollow cylindrical portion 21 of the can 20 has the protrusions 23, which are each hemispherical. The stator unit 30 includes the holding tabs 56, which are arranged so as to face the external circumferential surface of the hollow cylindrical portion 21. The holding tabs 56 include their respective holding portions 56a. In a state in which the can 20 is placed in the installation position, the protrusions 23 are held in the respective holding portions 56a. The dimension D1 of each holding portion 56a in the top-bottom direction is equal to or smaller than the diameter D2 of each protrusion 23. L3 - L4 < D1/2 holds for the motor-operated valve 1A. L3 denotes the distance in the top-bottom direction between the center of each holding portion 56a in the top-bottom direction and the rib 48. L4 denotes the distance in the top-bottom direction between the center of each protrusion 23 and a point P2, which is located on the ceiling portion 22 and comes into contact with the rib 48. D1 denotes the dimension of each holding portion 56a in the top-bottom direction. In a state in which the ceiling portion 22 and the rib 48 are in contact with each other, the center of each protrusion 23 is located within the corresponding holding portion 56a and is closer than the center of the corresponding holding portion 56a in the top-bottom direction to the dome portion 43. In this state, the holding tabs 56 undergo elastic deformation. The restoring force of the holding tabs 56 causes the can 20 to shift to the position (installation position) where the center of each protrusion 23 coincides with the center of the corresponding holding portion 56a in the top-bottom direction. Consequently, the can 20 is appropriately positioned with respect to the stator unit 30. In this embodiment, the distance between the ceiling portion 22 of the can 20 placed in the installation position and the rib 48 is long enough to prevent a collision between the ceiling portion 22 and the rib 48 under the influence of vibrations of the motor-operated valve 1A and is preferably in the range of 0.5 to 3 mm.

The top part of the dome portion 43 is thinner than the part extending from the external surface of the dome portion 43 to the tip surface 48a of the rib 48. A reduction in the thickness of the dome portion 43 is achieved accordingly. The cover 40A designed as above may be molded from resin in such a way as to minimize occurrence of sink marks.

## Claims

1. A motor-operated valve, comprising:

   a valve main body (10);
   a can (20) attached to the valve main body (10); and
   a stator unit (30) mounted on an outside of the can (20), wherein
   the can (20) includes a hollow cylindrical portion (21) and a ceiling portion (22) contiguous with an end (41a) of the hollow cylindrical portion (21),
   the stator unit (30) includes a cover (40, 40A, 40B) in a shape of a cap, a stator (50) accommodated in the cover (40, 40A, 40B) and having a hollow cylindrical shape, and a mold (60) made of filling resin with which a space between the stator (50) and the cover (40, 40A, 40B) is filled,
   the stator unit (30) has a cavity (30a) into which the can (20) is inserted in an axial direction,
the cover (40, 40A, 40B) includes a dome portion (43), with the ceiling portion (22) being located inside the dome portion (43),
when the can (20) is placed in an installation position such that the ceiling portion (22) and the dome portion (43) face each other in the axial direction with a space therebetween, the can (20) is held by the stator unit (30), and
when the can (20) is placed in a contact position such that the ceiling portion (22) and the dome portion (43) are in contact with each other in the axial direction, the can (20) is able to shift to the installation position,
wherein the dome portion (43) has an inner surface that includes a corner part (46),
when the can (20) is placed in the installation position, the corner part (46) and the ceiling portion (22) face each other in the axial direction with a space therebetween, and
when the can (20) is placed in the contact position, the corner part (46) and the ceiling portion (22) have line contact,
wherein the hollow cylindrical portion (21) of the can (20) has protrusions (23) that are each hemispherical,
the stator unit (30) includes holding tabs (56) that are arranged so as to face an external circumferential surface of the hollow cylindrical portion (21),
the holding tabs (56) each include a holding portion (56a) that is a through-hole or a recess in which corresponding one of the protrusions (23) is held when the can (20) is placed in the installation position,
wherein each holding portion (56a) is shaped in conformance with the corresponding protrusion (23),
a dimension of each of the holding portions (56a) in the axial direction is equal to or smaller than a diameter of each of the protrusions (23), and L1 - L2 < D1/2 holds, where L1 denotes a distance in the axial direction between a center of each of the holding portions (56a) in the axial direction and the corner part (46), L2 denotes a distance in the axial direction between a center of each of the protrusions (23) and a point (P1) that is located on the ceiling portion (22) and comes into contact with the corner part (46), and D1 denotes the dimension of each of the holding portions (56a) in the axial direction,
wherein in the installation position, the center of each holding portion (56a) in the axial direction coincides with the center of the corresponding protrusion (23).

2. The motor-operated valve according to Claim 1, wherein

when the can (20) is inserted into the cavity (30a) so as to reach the installation position, the dome portion (43) and the ceiling portion (22) face each other in the axial direction with a space therebetween, and

when the can (20) is inserted into the cavity (30a) so as to go beyond the installation position, the can (20) is placed in the contact position.

3. The motor-operated valve according to Claim 1, wherein

the corner part (46) and the can (20) have coincident axes, and

the corner part (46) is circular or arc-shaped and has a diameter smaller than an outside diameter of the can (20).

4. The motor-operated valve according to any one of Claims 1 to 3, wherein the dome portion (43) has a top part that is thinner than a part extending from an external surface of the dome portion (43) to the corner part (46).

5. A motor-operated valve, comprising:

a valve main body (10);

a can (20) attached to the valve main body (10); and

a stator unit (30) mounted on an outside of the can (20), wherein

the can (20) includes a hollow cylindrical portion (21) and a ceiling portion (22) contiguous with an end (41a) of the hollow cylindrical portion (21),

the stator unit (30) includes a cover (40, 40A, 40B) in a shape of a cap, a stator (50) accommodated in the cover (40, 40A, 40B) and having a hollow cylindrical shape, and a mold (60) made of filling resin with which a space between the stator (50) and the cover (40, 40A, 40B) is filled,

the stator unit (30) has a cavity (30a) into which the can (20) is inserted in an axial direction,

the cover (40, 40A, 40B) includes a dome portion (43), with the ceiling portion (22) being located inside the dome portion (43),

when the can (20) is placed in an installation position such that the ceiling portion (22) and the dome portion (43) face each other in the axial direction with a space therebetween, the can (20) is held by the stator unit (30), and

when the can (20) is placed in a contact position such that the ceiling portion (22) and the dome portion (43) are in contact with each other in the axial direction, the can (20) is able to shift to the installation position,

wherein the dome portion (43) has an inner surface that includes a rib (48),

when the can (20) is placed in the installation position, the rib (48) and the ceiling portion (22) face each other in the axial direction with a space therebetween, and

when the can (20) is placed in the contact position, a tip surface (48a) of the rib (48) and the ceiling portion (22) have surface contact,

wherein the hollow cylindrical portion (21) of the can (20) has protrusions (23) that are each hemispherical,

the stator unit (30) includes holding tabs (56) that are arranged so as to face an external circumferential surface of the hollow cylindrical portion (21),

the holding tabs (56) each include a holding portion (56a) that is a through-hole or a recess in which corresponding one of the protrusions (23) is held when the can (20) is placed in the installation position,

wherein each holding portion (56a) is shaped in conformance with the corresponding protrusion (23),

a dimension of each of the holding portions (56a) in the axial direction is equal to or less than a diameter of each of the protrusions (23), and L3 - L4 < D1/2 holds, where L3 denotes a distance in the axial direction between a center of each of the holding portions (56a) in the axial direction and the rib (48), L4 denotes a distance in the axial direction between a center of each of the protrusions (23) and a point (P2) that is located on the ceiling portion (22) and comes into contact with the rib (48), and D1 denotes the dimension of each of the holding portions (56a) in the axial direction,

wherein in the installation position, the center of each holding portion (56a) in the axial direction coincides with the center of the corresponding protrusion (23).

6. The motor-operated valve according to Claim 5, wherein

the rib (48) and the can (20) have coincident axes, and

the rib (48) is circular or arc-shaped and has a diameter smaller than an outside diameter of the can (20).

7. The motor-operated valve according to any one of Claims 5 or 6, wherein the dome portion (43) has a top part that is thinner than a part extending from an external surface of the dome portion (43) to the tip surface (48a) of the rib (48).

8. The motor-operated valve according to any one of Claims 1 to 3 and 5 to 6, wherein the dome portion (43) has a top part having an opening (49).

**Patentansprüche**

1. Ein motorbetriebenes Ventil, umfassend:

   ein Ventilgehäuse (10);
   eine Hülse (20), die am Ventilgehäuse (10) angeordnet ist; und
   eine Statoreinheit (30), die an einer Außenseite der Dose (20) angeordnet ist,

   wobei,

   die Hülse (20) einen hohlzylindrischen Abschnitt (21) und einen Deckenabschnitt (22) umfasst, der an ein Ende (41a) des hohlzylindrischen Abschnitts (21) angrenzt;
   die Statoreinheit (30) eine Abdeckung (40, 40A, 40B) in Form einer Kappe, einen Stator (50), der in der Abdeckung (40, 40A, 40B) angeordnet ist und eine hohlzylindrische Form aufweist, und eine Schalung (60), die aus Füllharz besteht und mit der ein Raum zwischen dem Stator (50) und der Abdeckung (40, 40A, 40B) gefüllt ist, umfasst;
   die Statoreinheit (30) eine Kavität (30a) aufweist, in die die Hülse (20) in axialer Richtung eingesetzt wird;
   die Abdeckung (40, 40A, 40B) einen Kuppelabschnitt (43) umfasst, wobei der Deckenabschnitt (22) innerhalb des Kuppelabschnitts (43) angeordnet ist;
   wenn die Hülse (20) derart in einer Einbauposition gebracht wird, dass sich der Deckenabschnitt (22) und der Kuppelabschnitt (43) durch einen Raum beabstandet axial gegenüberliegen, die Hülse (20) von der Statoreinheit (30) gehalten wird und
   wenn die Hülse (20) derart in einer Kontaktposition gebracht wird, dass der Deckenabschnitt (22) und der Kuppelabschnitt (43) in axialer Richtung in Kontakt stehen, die Dose (20) in die Einbauposition verschoben werden kann,
   wobei der Kuppelabschnitt (43) eine Innenfläche hat, die einen Eckbereich (46) umfasst,
   wenn die Hülse (20) derart in der Einbauposition platziert ist, sich der Eckbereich (46) und der Deckenabschnitt (22) durch einen Raum beabstandet axial gegenüberliegen, und wenn die Hülse (20) in der Kontaktposition platziert ist, der Eckbereich (46) und der Deckenabschnitt (22) Linienkontakt haben,
   wobei der hohlzylindrische Abschnitt (21) der Hülse (20) Vorsprünge (23) aufweist, die jeweils halbkugelförmig sind,
   die Statoreinheit (30) Halteklammern (56) umfasst, die derart angeordnet sind, dass sie einer äußeren Umfangsfläche des hohlzylindrischen Abschnitts (21) gegenüberliegen,
   die Halteklammern (56) jeweils einen Haltebereich (56a) umfassen, der ein Durchgangsloch oder eine Vertiefung ist, in dem der entsprechende Vorsprung (23) gehalten wird, wenn die Hülse (20) in der Installationsposition platziert ist,
   wobei jeder Haltebereich (56a) in Übereinstimmung mit dem entsprechenden Vorsprung (23) geformt ist,
   eine Dimensionierung jedes der Haltebereiche (56a) in axialer Richtung gleich oder kleiner ist als der Durchmesser jedes der Vorsprünge (23), und
   L1 - L2 < D 1/2 gilt, wobei L1 den Abstand in axialer Richtung zwischen der Mitte jedes Haltebereichs (56a) in axialer Richtung und dem Eckbereich (46) bezeichnet, L2 den Abstand in axialer Richtung zwischen der Mitte jedes Vorsprungs (23) und einem Punkt (P1) bezeichnet, der sich auf dem Deckenabschnitt (22) befindet und in Kontakt mit dem Eckbereich (46) kommt, und D1 die Dimensionierung jedes Haltebereichs (56a) in axialer Richtung bezeichnet,

   wobei in der Installationsposition die Mitte jedes Haltebereichs (56a) in axialer Richtung mit der Mitte des entsprechenden Vorsprungs (23) übereinstimmt.

2. Das motorbetriebene Ventil gemäß Anspruch 1, wobei,

   wenn die Hülse (20) in die Kavität (30a) eingeführt ist, um die Installationsposition zu erreichen, sich der Kuppelabschnitt (43) und der Deckenabschnitt (22) durch einen Raum beabstandet axial gegenüberliegen, und
   wenn die Hülse (20) in die Kavität (30a) eingeführt ist, um über die Installationsposition hinauszugehen, die Hülse (20) sich in der Kontaktposition befindet.

3. Das motorbetriebene Ventil gemäß Anspruch 1, wobei

   der Eckteil (46) und die Hülse (20) koaxiale Achsen haben und
   der Eckteil (46) kreis- oder bogenförmig ist und einen Durchmesser hat, der kleiner ist als der Außendurchmesser der Hülse (20).

4. Das motorbetriebene Ventil gemäß einem der Ansprüche 1 bis 3, wobei der Kuppelabschnitts (43) einen oberen Teil umfasst, der dünner ist als ein Teil, der sich von der Außenfläche des Kuppelabschnitts (43) zum Eckteil (46) erstreckt.

**5.** Ein motorbetriebenes Ventil, umfassend:

ein Ventilgehäuse (10);
eine Hülse (20), die am Ventilgehäuse (10) angeordnet ist; und
eine Statoreinheit (30), die an einer Außenseite der Dose (20) angeordnet ist,

wobei

die Hülse (20) einen hohlzylindrischen Abschnitt (21) und einen Deckelabschnitt (22) umfasst, der an ein Ende (41a) des hohlzylindrischen Abschnitts (21) angrenzt,
die Statoreinheit (30) eine Abdeckung (40, 40A, 40B) in Form einer Kappe, einen Stator (50), der in der Abdeckung (40, 40A, 40B) angeordnet ist und eine hohlzylindrische Form aufweist, und eine Schalung (60), die aus Füllharz besteht und mit der ein Raum zwischen dem Stator (50) und der Abdeckung (40, 40A, 40B) gefüllt ist, umfasst,
die Statoreinheit (30) eine Kavität (30a) aufweist, in die die Hülse (20) in axialer Richtung eingesetzt wird,
die Abdeckung (40, 40A, 40B) einen Kuppelabschnitt (43) umfasst, wobei der Deckelabschnitt (22) innerhalb des Kuppelabschnitts (43) angeordnet ist;
wenn die Hülse (20) derart in einer Einbauposition gebracht wird, dass sich der Deckenabschnitt (22) und der Kuppelabschnitt (43) durch einen Raum beabstandet axial gegenüberliegen, die Hülse (20) von der Statoreinheit (30) gehalten wird, und
wenn die Hülse (20) derart in einer Kontaktposition gebracht wird, dass der Deckenabschnitt (22) und der Kuppelabschnitt (43) in axialer Richtung in Kontakt stehen, die Hülse (20) in die Einbauposition verschoben werden kann,
wobei der Kuppelabschnitt (43) eine innere Oberfläche mit einer Kante (48) aufweist,
wenn die Hülse (20) derart in der Einbauposition platziert ist, sich die Kante (48) und der Deckelabschnitt (22) durch einen Raum beabstandet axial gegenüberliegen, und
wenn die Hülse (20) in der Kontaktposition ist, die Spitzenfläche (48a) der Kante (48) und der Deckelabschnitt (22) Flächenkontakt haben,
wobei der hohlzylindrische Abschnitt (21) der Hülse (20) Vorsprünge (23) aufweist, die jeweils halbkugelförmig sind,
die Statoreinheit (30) Halteklammern (56) umfasst, die derart angeordnet sind, dass sie einer äußeren Umfangsfläche des hohlzylindrischen Abschnitts (21) gegenüberliegen,

die Halteklammern (56) jeweils einen Haltebereich (56a) umfassen, der ein Durchgangsloch oder eine Vertiefung ist, in der ein entsprechender Vorsprung (23) gehalten wird, wenn die Hülse (20) in der Einbauposition ist,
wobei jeder Halteabschnitt (56a) in Übereinstimmung mit dem entsprechenden Vorsprung (23) geformt ist,
eine Dimensionierung jedes der Haltebereiche (56a) in axialer Richtung gleich oder kleiner als der Durchmesser jedes der Vorsprünge (23) ist, und
L3 - L4 < D1/2 gilt, wobei L3 den Abstand in axialer Richtung zwischen der Mitte jedes Halteabschnitts (56a) in axialer Richtung und der Kante (48) bezeichnet, L4 den Abstand in axialer Richtung zwischen der Mitte jedes Vorsprungs (23) und einem Punkt (P2) bezeichnet, der sich auf dem Deckelabschnitt (22) befindet und mit der Kante (48) in Kontakt kommt, und D1 die Dimensionierung jedes Haltebereichs (56a) in axialer Richtung bezeichnet,
wobei in der Einbauposition die Mitte jedes Haltebereichs (56a) in axialer Richtung mit der Mitte des entsprechenden Vorsprungs (23) übereinstimmt.

**6.** Das motorbetriebene Ventil gemäß Anspruch 5, wobei

die Kante (48) und die Hülse (20) koaxiale Achsen haben; und
die Kante (48) kreis- oder bogenförmig ist und einen Durchmesser hat, der kleiner ist als der Außendurchmesser der Hülse (20).

**7.** Das motorbetriebene Ventil gemäß einem der Ansprüche 5 oder 6, wobei der Kuppelabschnitt (43) einen oberen Teil umfasst, der dünner ist als ein Teil, der sich von einer äußeren Oberfläche des Kuppelabschnitts (43) zur Spitzenfläche (48a) der Kante (48) erstreckt.

**8.** Das motorbetriebene Ventil gemäß einem der Ansprüche 1 bis 3 und 5 bis 6, wobei der Kuppelabschnitt (43) einen oberen Teil mit einer Öffnung (49) umfasst.

**Revendications**

**1.** Soupape motorisée, comportant :

un corps principal de soupape (10) ;
un boîtier (20) fixé au corps principal de soupape (10) ; et
une unité de stator (30) montée sur un extérieur du boîtier (20), dans laquelle

le boîtier (20) inclut une portion cylindrique creuse (21) et une portion de plafond (22) contiguë à une extrémité (41a) de la portion cylindrique creuse (21),

l'unité de stator (30) inclut un couvercle (40, 40A, 40B) en forme de capuchon, un stator (50) reçu dans le couvercle (40, 40A, 40B) et ayant une forme cylindrique creuse, et un moule (60) constitué d'une résine de remplissage dont un espace entre le stator (50) et le couvercle (40, 40A, 40B) est rempli,

l'unité de stator (30) a une cavité (30a) dans laquelle le boîtier (20) est inséré dans une direction axiale,

le couvercle (40, 40A, 40B) inclut une portion de dôme (43), la portion de plafond (22) étant située à l'intérieur de la portion de dôme (43),

lorsque le boîtier (20) est placé dans une position d'installation de telle sorte que la portion de plafond (22) et la portion de dôme (43) sont dirigées l'une vers l'autre dans la direction axiale avec un espace entre celles-ci, le boîtier (20) est maintenu par l'unité de stator (30), et

lorsque le boîtier (20) est placé dans une position de contact de telle sorte que la portion de plafond (22) et la portion de dôme (43) sont en contact l'une avec l'autre dans la direction axiale, le boîtier (20) peut se déplacer jusqu'à la position d'installation,

dans laquelle la portion de dôme (43) a une surface intérieure qui inclut une partie de coin (46),

lorsque le boîtier (20) est placé dans la position d'installation, la portion de coin (46) et la portion de plafond (22) sont dirigées l'une vers l'autre dans la direction axiale avec un espace entre celles-ci,

lorsque le boîtier (20) est placé dans la position de contact, la partie de coin (46) et la portion de plafond (22) ont un contact linéaire,

dans laquelle la portion cylindrique creuse (21) du boîtier (20) a des saillies (23) qui sont chacune hémisphériques,

l'unité de stator (30) inclut des languettes de maintien (56) qui sont agencées de manière à faire face à une surface circonférentielle externe de la portion cylindrique creuse (21),

les languettes de maintien (56) incluent chacune une portion de maintien (56a) qui est un trou traversant ou un évidement dans lequel une saillie correspondante parmi les saillies (23) est maintenue lorsque le boîtier (20) est placé dans la position d'installation,

dans laquelle chaque portion de maintien (56a) est formée en conformité avec la saillie (23) correspondante,

une dimension de chacune des portions de maintien (56a) dans la direction axiale est égale ou inférieure à un diamètre de chacune des saillies (23), et

$L1 - L2 < D1/2$ s'applique, où L1 représente une distance dans la direction axiale entre un centre de chacune des portions de maintien (56a) dans la direction axiale et la partie de coin (46), L2 représente une distance dans la direction axiale entre un centre de chacune des saillies (23) et un point (P1) qui est situé sur la portion de plafond (22) et vient en contact avec la partie de coin (46), et D1 représente la dimension de chacune des portions de maintien (56a) dans la direction axiale,

dans laquelle dans la position d'installation, le centre de chaque portion de maintien (56a) dans la direction axiale coïncide avec le centre de la saillie (23) correspondante.

**2.** Soupape motorisée selon la revendication 1, dans laquelle

lorsque le boîtier (20) est inséré dans la cavité (30a) de manière à atteindre la position d'installation, la portion de dôme (43) et la portion de plafond (22) sont dirigées l'une vers l'autre dans la direction axiale avec un espace entre celles-ci, et

lorsque le boîtier (20) est inséré dans la cavité (30a) de manière à aller au-delà de la position d'installation, le boîtier (20) est placé dans la position de contact.

**3.** Soupape motorisée selon la revendication 1, dans laquelle

la partie de coin (46) et le boîtier (20) ont des axes coïncidents, et

la partie de coin (46) est de forme circulaire ou en arc et a un diamètre plus petit qu'un diamètre extérieur du boîtier (20).

**4.** Soupape motorisée selon l'une quelconque des revendications 1 à 3, dans laquelle la portion de dôme (43) a une partie supérieure qui est plus mince qu'une partie s'étendant à partir d'une surface externe de la partie de dôme (43) jusqu'à la partie de coin (46).

**5.** Soupape motorisée, comportant :

un corps principal de soupape (10) ;

un boîtier (20) fixé au corps principal de soupape (10) ; et

une unité de stator (30B) montée sur un extérieur du boîtier (20), dans laquelle le boîtier (20) inclut une portion cylindrique creuse (21) et une portion de plafond (22) contiguë à une extrémité (41a) de la portion cylindrique creuse (21),

l'unité de stator (30) inclut un couvercle (40, 40A, 40B) en forme de capuchon, un stator (50) reçu dans le couvercle (40, 40A, 40B) et ayant une forme cylindrique creuse, et un moule (60) constitué d'une résine de remplissage dont un espace entre le stator (50) et le couvercle (40, 40A, 40B) est rempli,

l'unité de stator (30) a une cavité (30a) dans laquelle le boîtier (20) est inséré dans une direction axiale,

le couvercle (40, 40A, 40B) inclut une portion de dôme (43), la portion de plafond (22) étant située à l'intérieur de la portion de dôme (43),

lorsque le boîtier (20) est placé dans une position d'installation de telle sorte que la portion de plafond (22) et la portion de dôme (43) sont dirigées l'une vers l'autre dans la direction axiale avec un espace entre celles-ci, le boîtier (20) est maintenu par l'unité de stator (30), et

lorsque le boîtier (20) est placé dans une position de contact de telle sorte que la portion de plafond (22) et la portion de dôme (43) sont en contact l'une avec l'autre dans la direction axiale, le boîtier (20) peut se déplacer jusqu'à la position d'installation,

dans laquelle la portion de dôme (43) a une surface intérieure qui inclut une nervure (48),

lorsque le boîtier (20) est placé dans la position d'installation, la nervure (48) et la portion de plafond (22) sont dirigées l'une vers l'autre dans la direction axiale avec un espace entre celles-ci, et

lorsque le boîtier (20) est placé dans la position de contact, une surface d'extrémité (48a) de la nervure (48) et la portion de plafond (22) ont un contact de surface,

dans laquelle la portion cylindrique creuse (21) du boîtier (20) a des saillies (23) qui sont chacune hémisphériques,

l'unité de stator (30) inclut des languettes de maintien (56) qui sont agencées de manière à faire face à une surface circonférentielle externe de la portion cylindrique creuse (21),

les languettes de maintien (56) incluent chacune une portion de maintien (56a) qui est un trou traversant ou un évidement dans lequel une saillie correspondante parmi les saillies (23) est maintenue lorsque le boîtier (20) est placé dans la position d'installation,

dans laquelle chaque portion de maintien (56a) est formée en conformité avec la saillie (23) correspondante,

une dimension de chacune des portions de maintien (56a) dans la direction axiale est égale ou inférieure à un diamètre de chacune des saillies (23), et

L3 - L4 < D1/2 s'applique, où L3 représente une distance dans la direction axiale entre un centre de chacune des portions de maintien (56a) dans la direction axiale et la nervure (48), L4 représente une distance dans la direction axiale entre un centre de chacune des saillies (23) et un point (P2) qui est situé sur la portion de plafond (22) et vient en contact avec la nervure (48), et D1 représente la dimension de chacune des portions de maintien (56a) dans la direction axiale, dans laquelle dans la position d'installation, le centre de chaque portion de maintien (56a) dans la direction axiale coïncide avec le centre de la saillie (23) correspondante.

6. Soupape motorisée selon la revendication 5, dans laquelle

la nervure (48) et le boîtier (20) ont des axes coïncidents, et

la nervure (48) est de forme circulaire ou en arc et a un diamètre plus petit qu'un diamètre extérieur du boîtier (20).

7. Soupape motorisée selon l'une quelconque des revendications 5 ou 6, dans laquelle la portion de dôme (43) a une partie supérieure qui est plus mince qu'une partie s'étendant à partir d'une surface externe de la partie de dôme (43) jusqu'à la surface d'extrémité (48a) de la nervure (48).

8. Soupape motorisée selon l'une quelconque des revendications 1 à 3 et 5 à 6, dans laquelle la portion de dôme (43) a une portion supérieure ayant une ouverture (49).

# FIG.1

# FIG.2

FIG.3

# FIG.4

# FIG.5

# FIG.6

# FIG.7

FIG.8

FIG.9

# FIG.10

# FIG.11

# FIG.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001343085 A
- JP 2019146299 A
- JP 2011208729 A
- CN 102035204 B